**Europäisches Patentamt**

**European Patent Office**

**Office européen des brevets**

(19)

(11) **EP 0 910 596 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(51) Int Cl.$^7$: **C08G 18/76**, C08G 18/72, C08G 18/66

(21) Anmeldenummer: **97930440.9**

(22) Anmeldetag: **30.06.1997**

(86) Internationale Anmeldenummer:
**PCT/EP97/03396**

(87) Internationale Veröffentlichungsnummer:
**WO 98/02476 (22.01.1998 Gazette 1998/03)**

(54) **VERFAHREN ZUR HERSTELLUNG VON ZELLIGEN POLYURETHAN-ELASTOMEREN UND HIERFÜR GEEIGNETE ISOCYANATPREPOLYMERE**

PROCESS FOR PREPARING CELLULAR POLYURETHANE ELASTOMERS AND ISOCYANATE PREPOLYMERS SUITABLE FOR THIS PURPOSE

PROCEDE DE PREPARATION D'ELASTOMERES DE POLYURETHANNE CELLULAIRES ET PREPOLYMERES D'ISOCYANATE UTILES A CET EFFET

(84) Benannte Vertragsstaaten:
**AT BE CH DE ES FR GB IT LI NL SE**

(30) Priorität: **11.07.1996 DE 19627907**

(43) Veröffentlichungstag der Anmeldung:
**28.04.1999 Patentblatt 1999/17**

(73) Patentinhaber: **BASF AKTIENGESELLSCHAFT 67056 Ludwigshafen (DE)**

(72) Erfinder:
- **GENZ, Manfred**
  **D-49401 Damme (DE)**
- **HASELHORST, Walter**
  **D-49088 Osnabrück (DE)**
- **JESCHKE, Torsten**
  **D-49152 Wehrendorf (DE)**
- **NICHAU, Ute**
  **D-49808 Lingen (DE)**
- **BOLLMANN, Heinz**
  **D-49594 Alfhausen (DE)**
- **STRAUSS, Michael**
  **D-49448 Lemförde (DE)**
- **SCHOLZ, Wolfgang**
  **D-49448 Lemförde (DE)**
- **VOELKEL, Rüdiger**
  **D-64625 Bensheim (DE)**
- **PEUKER, Hartmut**
  **D-49143 Bi endorf (DE)**
- **HELLMANN, Gerhard**
  **D-67098 Bad Dürkheim (DE)**

(56) Entgegenhaltungen:
**EP-A- 0 316 150         DE-A- 19 538 330**
**GB-A- 2 118 955         US-A- 4 191 818**

Bemerkungen:
Die Akte enthält technische Angaben, die nach dem Eingang der Anmeldung eingereicht wurden und die nicht in dieser Patentschrift enthalten sind.

**Beschreibung**

Gegenstand der Erfindung ist ein Verfahren zur Herstellung von zelligen Polyurethan-Elastomeren, im folgenden auch abgekürzt PU-Elastomere genannt.

Die Herstellung von zelligen, z.B. mikrozellularen, PU-Elastomeren ist seit langem aus zahlreichen Patent- und Literaturveröffentlichungen bekannt.

Ihre technische Bedeutung beruht auf der Kombination hochwertiger mechanischer Eigenschaften mit den Vorteilen der kostengünstigen Verarbeitungsmethoden. Durch die Verwendung verschiedenartiger chemischer Aufbaukomponenten in unterschiedlichen Mengenverhältnissen können thermoplastisch verarbeitbare oder vernetzte, zellige PU-Elastomere hergestellt werden, die sich hinsichtlich ihrer Verarbeitbarkeit und ihren mechanischen Eigenschaften vielfältig unterscheiden. Eine Übersicht über PU-Elastomere, ihre Eigenschaften und Anwendungen wird z. B. im Kunststoff-Handbuch, Band 7, Polyurethane. 1. Auflage, 1966, herausgegeben von Dr. R. Vieweg und Dr. A. Höchtlen, 2. Auflage, 1983, herausgegeben von Dr. G. Oertel, und 3. Auflage, 1993, herausgegeben von Prof. Dr. G. W. Becker und Prof. Dr. D. Braun, (Carl-Hanser-Verlag, München, Wien) gegeben.

Mikrozellulare PU-Elastomere zeichnen sich in Bezug auf die in analoger Weise verwendbaren Gummitypen durch ihre deutlich besseren Dämpfungseigenschaften bei einer ausgezeichneten Volumenkompressibilität aus, so daß sie als Bestandteile von schwingungsund stoßdämpfenden Systemen, insbesondere in der Automobilindustrie, Verwendung finden. Zur Herstellung von mikrozellularen PU-Elastomeren haben sich Umsetzungsprodukte aus 1,5-NDI und Poly(ethylenglykoladipat) mit einem Molekulargewicht von 2.000, die in Form eines Isocyanatprepolymeren mit einer aktivatorhaltigen, wäßrigen Lösung eines Fettsäuresulfonats zur Reaktion gebracht werden, bewährt. (Kunststoff-Handbuch, Band 7, Polyurethane, 1. Auflage, Seiten 270ff.)

Da solche Basisformulierungen mikrozellulare PU-Elastomere mit sehr guten Dämpfungscharakteristiken und statischen und dynamischen Leistungsparametern ergeben, sind aus dem Stand der Technik nur vereinzelte Bemühungen bekannt, das für die guten Elastomereigenschaften verantwortliche 1,5-NDI, trotz dessen schwierigeren Handhabung wegen seines hohen Schmelzpunktes, durch leichter handhabbare und preisgünstigere Diisocyanate zu substituieren, da hierbei deutliche mechanische Eigenschaftsverluste resultieren. Charakteristische Wertunterschiede zwischen auf 1,5-NDI und 4,4'-MDI basierenden kompakten PU-Elastomeren im allgemeinen und bei mikrozellularen PU-Elastomeren im besonderen werden im Journal of Elastomers and Plastics, Vol. 21, (1989), Seiten 100 bis 121, dargelegt. Als wesentliche Nachteile für ein mikrozellulares PU-Elastomer auf 4,4'-MDI-Basis werden ein deutlich höherer Dämpfungsgrad mit verstärkter Materialaufheizung und signifikant erhöhten Setzbeträgen bei dynamischer Belastung angeführt, die schließlich im Vergleich zu PU-Elastomeren auf 1,5-NDI-Basis zu einem schnelleren Materialverschleiß führen.

Trotz dieser offenkundig bestehenden Nachteile wurde bei der Herstellung von mikrozellularen PU-Elastomeren versucht, das 1,5-NDI durch das tieferschmelzende und kostengünstigere 4,4'-MDI zu ersetzen. Diese Versuche beschränken sich jedoch auf den Einsatz neuer Ausgangskomponenten, insbesondere höhermolekularer Polyhydroxylverbindungen, mit deren Verwendung bestimmte mechanische Eigenschaften des mikrozellularen PU-Elastomeren verbessert werden.

Die EP-A-0 496 204 (US-A-5 173 518) beschreibt ein Verfahren zur Herstellung von zelligen PU-Elastomeren unter Verwendung von Polyetherpolycarbonatdiolen, welche Polyoxytetramethylenglykolreste mit einem mittleren Molekulargewicht von 150 bis 500 einkondensiert enthalten, als höhermolekulare Polyhydroxylverbindungen. Verbessert werden dadurch die mechanischen Eigenschaften, insbesondere die Bruchdehnungswerte, auch bei tieferen Temperaturen. Eine Verbesserung der bekanntlich mit den dynamischen Setzbeträgen korrelierenden statischen Druckverformungsreste nach DIN 53 572 bei 70°C ist jedoch nicht erkennbar. Selbst bei Verwendung von 1,5-NDI als Polyisocyanat werden nur durchschnittliche statische Druckverformungsreste erhalten.

Die EP-B-0 243 832 (US-A-4 798 851), die den Einsatz von Quasiprepolymeren auf 4,4'-MDI-Basis u.a. auch in Verbindung mit Wasser als Treibmittel zur Herstellung von elastischen, kompakten oder zelligen PU- oder PU-Polyharnstoff-Formkörpern beschreibt, beinhaltet als wesentliche erfinderische Lehre die Verwendung eines hydroxylgruppenhaltigen Polykondensates aus einem kurzkettigen Polyoxytetramethylenglykol und einer aliphatischen Dicarbonsäure als höhermolekulare Polyhydroxylverbindung mit der erfinderischen Aufgabe, eine mittels Pumpen gut dosierfähige estergruppenhaltige Polyhydroxylverbindung für zellige oder kompakte PU-Elastomere mit verbesserten mechanischen und hydrolytischen Eigenschaften zu erhalten. Angaben über bleibende Verformungsgrade bei statischer bzw. dynamischer Belastung, wodurch vibrationsbeständige Materialien üblicherweise charakterisiert werden, werden nicht offenbart.

Die DE-A-36 13 961 (US-A-4 647 596) beschreibt ein mikrozellulares PU-Elastomer auf der Grundlage von 4,4'-MDI, das aufgrund einer definierten Zusammensetzung der höhermolekularen Polyhydroxyverbindungen, bestehend aus einem Copolymeren aus Polytetrahydrofuran und ε-Caprolacton, mechanische Kennwerte aufweist, die einen günstigen Kompromiß zwischen statischer Festigkeit und dynamischer Belastbarkeit darstellen. Trotz Einsatz teurer Grundstoffe zur Herstellung der Polyhydroxylverbindungen erscheint der dadurch erzielte Leistungsgewinn bei Betrachtung der Prüfwerte "Produkthaltbarkeit, Biegefestigkeit nach De Mattia und bleibende Verformung bei 50 % Kompression" nur relativ gering. Beispielsweise zeigen die im direkten Zusammenhang mit der praxisrelevanten Größe des dynamischen Setzbetrages bestehenden Meßwerte für den Druckverformungsrest nur geringfügige Verbesserungen bei Anwendung der erfindungsgemäßen Lehre.

Auch erscheinen die verwendeten Prüfkriterien "Produkthaltbarkeit und Biegefestigkeit nach De Mattia" für eine praxisnahe Bewertung der dynamischen Eigenschaften nicht ausreichend geeignet, da sie gerade bei partiellen Kennwertverbesserungen nur ungenügend differenziert die objektiv bestehenden Leistungsunterschiede zwischen 4,4'-MDI und 1,5-NDI basierenden Polyurethan-Elastomeren darzustellen vermögen. So zeigt das Beispiel auf 1,5-NDI-Grundlage als Zielgröße kein qualitativ höheres Kennwertniveau als die Beispiele auf 4,4'-MDI-Basis.

Bekannt ist auch die stufenweise Herstellung von PU-Elastomeren. Nach Angaben der DE-A-25 47 864 (US-A-4 191 818) kann ein wärmebeständiges PU-Elastomeres hergestellt werden durch Umsetzung einer im wesentlichen linearen höhermolekularen Dihydroxyverbindung mit einer unterschüssigen Menge Diisocyanat zu einem endständige Hydroxylgruppen aufweisenden Addukt und nachfolgende Umsetzung dieses Addukts mit einem symmetrischen aromatischen Diisocyanat im Überschuß und Alkandiolen oder Di-(alkylenglykol)-terephthalaten als Kettenverlängerungsmittel. Sofern nach dieser Verfahrensweise zellige PU-Elastomere hergestellt werden sollen, kann als Kettenverlängerungsmittel auch Wasser, gegebenenfalls in Verbindung mit Alkandiolen und/oder Di-(alkylen-glykol)-terephthalaten verwendet werden.

Zellhaltige PU-Elastomere können auch nach dem in der DE-A-2 940 856 (US-A-4 334 033) beschriebenen Verfahren hergestellt werden. Nach diesem Verfahren werden die höhermolekularen Polyhydroxylverbindungen und gegebenenfalls Kettenverlängerungsmittel mit einem organischen Diisocyanat im Verhältnis von OH- zu NCO-Gruppen von 1,2:1 bis 2:1 zu einem hydroxylgruppenhaltigen Prepolymeren umgesetzt. Dieses wird im Gewichtsverhältnis von ungefähr 80 bis 20 : 20 bis 80 in eine Komponente (I) und (II) geteilt, die Komponente (I) wird mit 1,5-NDI im Verhältnis von OH-:NCO-Gruppen von 1:2,5 bis 12 zu einem NCO-Gruppen aufweisenden NDI-Polyurethan-Addukt umgesetzt und die Komponente (II) mit Kettenverlängerungsmittel, Wasser und Zusatzstoffen zu einer Mischung (II) vereinigt. Das NDI-Polyurethan-Addukt und die Mischung (II) werden schließlich zu einem gegebenenfalls zellhaltigen PU-Elastomeren umgesetzt. Nach diesem Verfahren können die Aufbaukomponenten exakt dosiert und schnell und intensiv gemischt werden. Die PU-Elastomeren sind homogen und besitzen über das gesamte Formteil einheitliche mechanische Eigenschaften.

Ferner offenbart US 4,191,818 ein Verfahren zur Herstellung von kompakten Polyurethangießelastomeren, wobei zuerst ein Polyisocyanat mit einem hochmolekularen Polyol in einem Verhältnis von OH:NCO von 1:0,66 bis 1:0,85 umgesetzt wird und anschließend dieses Reaktionsprodukt mit einem Überschuß von einem symmetrischen Diisocyanat und einem Diol als Kettenverlängerer zur Reaktion gebracht wird.

Die Aufgabe der vorliegenden Erfindung bestand darin, ein Verfahren zur Herstellung von vorzugsweise mikrozelligen PU-Elastomeren bereitzustellen, bei dem zumindest teilweise das teuere 1,5-NDI durch leichter handhabbare und kostengünstigere organische Diisocyanate oder Mischungen von Diisocyanaten ersetzt werden kann. Trotz der Mitverwendung anderer organischer Diisocyanate sollten die mechanischen Eigenschaften der hergestellten PU-Elastomeren verbessert werden oder zumindest solchen auf 1,5-NDI-Basis im wesentlichen entsprechen. Unabhängig von der Art der verwendeten höhermolekularen Polyhydroxylverbindungen sollten die mikrozellularen PU-Elastomeren im Vergleich zu PU-Elastomeren auf 4,4'-MDI-Basis eindeutig verbesserte statische und mechanische Kennwerte, insbesondere Druckverformungsreste und dynamische Setzbeträge besitzen, so daß sie insbesondere zur Herstellung von Schwingungs- und Stoßdämpfungssystemen verwendet werden können.

Gegenstand der Erfindung ist somit ein Verfahren zur Herstellung von zelligen, vorzugsweise mikrozellularen PU-Elastomeren durch Umsetzung von

a) Polyhydroxylverbindungen mit einer Funktionalität von 2 bis 3 und einem Molekulargewicht von 800 bis 6000 und

b) gegebenenfalls Kettenverlängerungs- und/oder Vernetzungsmitteln mit einem Molekulargewicht bis 800 mit

c) organischen Polyisocyanatprepolymeren

d) gegebenenfalls Katalysatoren,

e) Treibmitteln und

f) gegebenenfalls Zusatzstoffen,

dadurch gekennzeichnet, daß man organische Polyisocyanatprepolymere verwendet, die erhältlich sind durch Umsetzung von mindestens einem aromatischen Diisocyanat, ausgewählt aus der Gruppe Toluylen-diisocyanat, Diphenylmethan-diisocyanat, 3,3'-Dimethyl-diphenyl-diisocyanat, 1,2-Diphenylethan-diisocyanat und/oder aliphatisches Diisocyanat mit 4 bis 12 Kohlenstoffatomen und/oder cycloaliphatisches Diisocyanat mit 6 bis 18 Kohlenstoffatomen mit der Komponente a) oder einer Mischung der Komponenten a) und b) im Äquivalenzverhältnis der Hydroxylgruppen von a) oder a) und b) von 1 : größer als 1 bis 6 zu einem Urethan- und Isocyanatgruppen enthaltenden Polyadditionsprodukt und anschließender Reaktion des Polyadditionsproduktes mit 1,4-Phenyldiisocyanat im Äquivalenzverhältnis von Hydroxylgruppen von a) oder a) und b) von 1 : 0,02 bis 6 zu Polyisocyanatprepolymeren.

Gegenstand der Erfindung sind ferner Polyisocyanatprepolymere mit einem NCO-Gehalt von 3,3 bis 10 Gew.-%, hergestellt durch Umsetzung mindestens einer Polyhydroxylverbindung mit einer Funktionalität von 2 bis 3 und einem Molekulargewicht von 800 bis 6000 (a) oder einer Mischung aus (a) und einem Kettenverlängerungs- und/oder Vernetzungsmittel mit einem Molekulargewicht bis 800 (b) mit mindestens einem aromatischen Diisocyanat, ausgewählt aus der Gruppe Toluylen-diisocyanat, Diphenylmethan-diisocyanat, 3,3'-Dimethyl-diphenyl-diisocyanat, 1,2-Diphenylethan-diisocyanat, und/oder 1,6-Hexamethylen-diisocyanat und/oder 1-Isocyanato-3,3,5-trimethyl-5-isocyanatomethyl-cyclohexan zu einem Urethan- und Isocyanatgruppen aufweisenden Polyadditionsprodukt mit einem NCO-Gehalt von 0,05 bis 8 Gew.-% und dessen Umsetzung mit 1,4-Phenylendiisocyanat (p-PDI) zum Isocyanatgruppen aufweisenden Prepolymeren, wobei das Äquivalenzverhältnis der Hydroxylgruppen von (a) oder (a) und (b) zu NCO-Gruppen der aromatischen Diisocyanate, ausgewählt aus der Gruppe Toluylen-diisocyanat, Diphenylmethan-diisocyanat, 3,3'-Dimethyl-diphenyl-diisocyanat, 1,2-Diphenylethan-diisocyanat, und/oder 1,6-Hexamethylen-diisocyanat und/oder 1-Isocyanato-3,3,5-trimethyl-5-isocyanatomethyl-cyclohexan und NCO-Gruppen von 1,4-Phenylendiisocyanat (p-PDI) 1 : größer als 1 bis 6 : 0,02 bis 6 beträgt.

Schließlich sind zellige Polyurethan-Elastomere, erhältlich durch das vorstehend beschriebene Verfahren Gegenstand der Erfindung.

Die mikrozellularen PU-Elastomeren zeigen hervorragende statische und dynamische Kennwerte. Aufgrund ihrer spezifischen Dämpfungscharakteristiken und Dauergebrauchseigenschaften finden sie insbesondere Verwendung in vibrations- und stoßdämpfenden Systemen.

Da die Kristallisationsfähigkeit der aus Harnstoff- und/oder Urethangruppen bestehenden Hartsegmente der PU-Elastomeren auf Basis von p-PDI durch die Mitverwendung weniger gut kristallisierender Diisocyanate, wie z.B. des preisgünstigen 4,4'-MDI mit seiner gewinkelten Struktur, erheblich gestört wird, mußte der Fachmann annehmen, daß die resultierenden PU-Elastomeren schlechtere statische und dynamische Eigenschaften besitzen als solche auf Basis eines aromatischen Diisocyanats.

Es war daher nicht vorhersehbar, daß die aus p-PDI-haltigen aromatischen, aliphatischen und/oder cycloaliphatischen Diisocyanatmischungen hergestellten mikrozellularen PU-Elastomeren gute mechanische Eigenschaften besitzen, die mit ausschließlich aus p-PDI-hergestellten Elastomeren nahezu vergleichbar sind und bezüglich mikrozellularer PU-Elastomerer auf 4,4'-MDI-Basis eindeutig verbesserte statische, mechanische Kennwerte, insbesondere Druckverformungsreste und dynamische Setzbeträge besitzen. Die nach dem erfindungsgemäßen Verfahren hergestellten mikrozellularen PU-Elastomeren sind somit preisgünstiger als PU-Elastomere auf 1,5-NDI-Basis und eignen sich aufgrund ihrer guten statischen, mechanischen Kennwerte vorzüglich zur Herstellung von Schwingungs- und Stoßdämpfungssystemen. Ferner ist die Reaktionsmischung einfacher hand- und verarbeitbar.

Zu den Ausgangsstoffen (a) bis (f) zur Herstellung der zelligen, z.B. mikrozellularen PU-Elastomeren und dem erfindungsgemäßen Verfahren ist folgendes auszuführen:

a) Geeignete höhermolekulare Polyhydroxylverbindungen besitzen vorteilhafterweise eine Funktionalität von 3 oder vorzugsweise 2 und ein Molekulargewicht von 800 bis 6000 und insbesondere von 1.000 bis 3.300 und bestehen zweckmäßigerweise aus hydroxylgruppenhaltigen Polymeren, z.B. Polyacetalen, wie Polyoxymethylenen und vor allem wasserunlöslichen Formalen, z.B. Polybutandiolformal und Polyhexandiolformal, Polyoxyalkylen-polyolen, wie z.B.

Polyoxybutylen-glykolen, Polyoxybutylen-polyoxyethylenglykolen, Polyoxybutylen-polyoxypropylen-glykolen, Polyoxybutylen-polyoxypropylen-polyoxyethylen-glykolen, Polyoxypropylen-polyolen und Polyoxypropylen-polyoxyethylenpolyolen, und Polyester-polyolen, z.B. Polyester-polyolen aus organischen Dicarbonsäuren und/oder Dicarbonsäurederivaten und 2- bis 3-wertigen Alkoholen und/oder Dialkylenglykolen, aus Hydroxycarbonsäuren und Lactonen sowie hydroxylgruppenhaltigen Polycarbonaten.

Als höhermolekulare Polyhydroxylverbindung hervorragend bewährt haben sich und daher vorzugsweise verwendet werden difunktionelle Polyhydroxylverbindungen mit Molekulargewichten von größer 800 bis 3.500, vorzugsweise von 1.000 bis 3.300 ausgewählt aus der Gruppe der Polyester-polyole, hydroxylgruppenhaltigen Polycarbonate und Polyoxybutylen-glykole. Die höhermolekularen Polyhydroxylverbindungen können einzeln oder als Mischungen verwendet werden.

Geeignete Polyoxyalkylen-polyole können hergestellt werden nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 oder 3, vorzugsweise 2 reaktive Wasserstoffatome gebunden enthält, oder durch kationische Polymerisation mit Lewis-Säuren, wie z.B. Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest.

Geeignete Alkylenoxide sind beispielsweise 1,3-Propylenoxid, 1,2- bzw. 2,3-Butylenoxid, vorzugsweise Ethylenoxid und 1,2-Propylenoxid und insbesondere Tetrahydrofuran. Die Alkylenoxide können einzeln, alternierend nacheinander oder als Mischung verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, N-mono- und N,N'-dialkylsubstituierte Diamine mit 1 bis 4 Kohlenstoffatomen im Alkylrest, wie mono- und dialkylsubstituiertes Ethylenamin, 1,3-Propylendiamin, 1,3- bzw. 1,4-Butylendiamin, 1,2-, 1,3-, 1,4, 1,5- und 1,6-Hexamethylendiamin, Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden zwei- und/oder dreiwertige Alkohole, z.B. Alkandiole mit 2 bis 12 C-Atomen, vorzugsweise 2 bis 4 C-Atomen, wie z.B. Ethandiol, Propandiol-1,2 und -1,3, Butandiol-1,4, Pentandiol-1,5, Hexandiol-1,6, Glycerin und Trimethylolpropan, und Dialkylenglykole, wie z.B. Diethylen-glykol und Dipropylenglykol.

Als Polyoxyalkylen-polyole bevorzugt verwendet werden Polyoxybutylen-glykole (Polyoxytetramethylen-glykole) mit Molekulargewichten von 500 bis 3.000, vorzugsweise von 650 bis 2.300.

Als Polyhydroxylverbindungen (a) bevorzugt verwendet werden können ferner Polyester-polyole, die beispielsweise aus Alkandicarbonsäuren mit 2 bis 12 Kohlenstoffatomen, vorzugsweise Alkandicarbonsäuren mit 4 bis 6 Kohlenstoffatomen und/oder aromatischen Dicarbonsäuren und mehrwertigen Alkoholen, vorzugsweise Alkandiolen mit 2 bis 12 Kohlenstoffatomen, vorzugsweise 2 bis 6 Kohlenstoffatomen und/oder Dialkylenglykolen hergestellt werden können. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Dicarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Alkandiole oder Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die aromatischen und/oder aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titanund Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Als Polyester-polyole vorzugsweise verwendet werden Poly(alkandioladipate) wie z.B. Poly(ethandioladipate), Poly-(1,4- butandioladipate), Poly(ethandiol-1,4-butandioladipate), Poly(1,6-hexandiol-neopentylglykoladipate) und Poly(1,6- hexandiol-1,4-butandioladipate) und Polycaprolactone.

Als geeignete Polyester-polyole sind ferner Hydroxylgruppen aufweisende Polycarbonate zu nennen. Derartige hydroxylgruppenhaltige Polycarbonate können beispielsweise hergestellt werden durch Umsetzung der vorgenannten Alkandiole, insbesondere von 1,4-Butandiol und/oder 1,6-Hexandiol, und/oder Dialkylenglykole, wie z.

B. Diethylen-glykol, Dipropylenglykol und Dibutylen-glykol, mit Dialkyl- oder Diarylcarbonaten, z.B. Diphenylcarbonat, oder Phosgen. Als Hydroxylgruppen aufweisende Polycarbonate werden bevorzugt Polyether-polycarbonatdiole verwendet, die hergestellt werden können durch Polykondensation von

a1) Polyoxybutylen-glykol mit einem Molekulargewicht von 150 bis 500 oder von

a2) Mischungen, die bestehen aus

i) mindestens 10 mol-%, vorzugsweise 50 bis 95 mol-% eines Polyoxybutylen-glykols mit einem Molekulargewicht von 150 bis 500 (a1) und

ii) weniger als 90 mol-%, vorzugsweise 5 bis 50 mol-% mindestens eines von (a1) verschiedenen Polyoxyalkylen-glykols mit einem Molekulargewicht von 150 bis 2.000, mindestens eines Dialkylen-glykols, mindestens eines linearen oder verzweigten Alkandiols mit 2 bis 12 Kohlenstoffatomen und mindestens eines cyclischen Alkandiols mit 5 bis 15 Kohlenstoffatomen oder Mischungen davon

mit Phosgen, Diphenylcarbonat oder Dialkylcarbonaten mit $C_1$- bis $C_4$-Alkylgruppen.

b) Zur Herstellung der zelligen PU-Elastomeren nach dem erfindungsgemäßen Verfahren können zusätzlich zu den höhermolekularen Polyhydroxylverbindungen (a) gegebenenfalls auch niedermolekulare difunktionelle Kettenverlängerungsmittel (b), niedermolekulare, vorzugsweise tri- oder tetrafunktionelle Vernetzungsmittel (b) oder Mischungen aus Kettenverlängerungs- und Vernetzungsmitteln verwendet werden.

Derartige Kettenverlängerungs- und Vernetzungsmittel (b) werden eingesetzt zur Modifizierung der mechanischen Eigenschaften, insbesondere der Härte der PU-Elastomeren. Geeignete Kettenverlängerungsmittel, wie z. B. Alkandiole, Dialkylen-glykole und Polyoxyalkylen-glykole, und Vernetzungsmittel, z.B. 3- oder 4-wertige Alkohole und oligomere Polyoxyalkylen-polyole mit einer Funktionalität von 3 bis 4, besitzen üblicherweise Molekulargewichte kleiner als 800, vorzugsweise von 18 bis 400 und insbesondere von 60 bis 300. Als Kettenverlängerungsmittel vorzugsweise verwendet werden Alkandiole mit 2 bis 12 Kohlenstoffatomen, vorzugsweise 2, 4 oder 6 Kohlenstoffatomen, wie z.B. Ethan-, 1,3-Propan-, 1,5-Pentan-, 1,6-Hexan-, 1,7-Heptan-, 1,8-Octan-, 1,9,Nonan-, 1,10-Decandiol und insbesondere 1,4-Butandiol und Dialkylenglykole mit 4 bis 8 Kohlenstoffatomen, wie z.B. Diethylenglykol und Dipropylen-glykol sowie Polyoxyalkylen-glykole. Geeignet sind jedoch auch verzweigtkettige und/oder ungesättigten Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(β-hydroxyethyl)-hydrochinon oder 1,3-Di-(β-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin, (cyclo)aliphatische Diamine mit 2 bis 15 Kohlenstoffatomen, wie z.B. Ethylen-, 1,2-, 1,3-Propylen-, 1,4-Butylen- und 1,6-Hexamethylendiamin, Isophoron-diamin, 1,4-Cyclohexylen-diamin und 4,4'-Diamino-dicyclohexylmethan, N-Alkyl- und N,N'-Dialkylalkylendiamine wie z.B. N-Methyl-propylendiamin und N,N'-Dimethyl-ethylen-diamin und aromatische Diamine, wie z.B. Methylen-bis(4-amino-3-benzoesäuremethylester), 1,2-Bis-(2-aminophenyl-thio)ethan, Trimethylenglykoldi-p-aminobenzoat, 2,4- und 2,6-Toluylen-diamin, 3,5-Diethyl-2,4- und -2,6-toluylen-diamin, 4,4'-Diaminodiphenylmethan, 3,3'-Dichlor-4,4'-diamino-diphenylmethan und primäre ortho-di-, -tri- und/oder -tetraalkylsubstituierte 4,4'-Diamino-diphenylmethane, wie z.B. 3,3'-Di- und 3,3',5,5'-Tetraisopropyl-4,4'-diamino-diphenylmethan.

Als mindestens trifunktionelle Vernetzungsmittel, die zweckmäßigerweise zur Herstellung der PU-Gießelastomeren mitverwendet werden, seien beispielhaft genannt: tri- und tetrafunktionelle Alkohole, wie z.B. Glycerin, Trimethylolpropan, Pentaerythrit und Trihydroxycyclohexane und Tetrahydroxyalkylalkylen-diamine, wie z.B. Tetra-(2-hydroxyethyl)-ethylendiamin oder Tetra-(2-hydroxypropyl)ethylen-diamin sowie oligomere Polyoxyalkylen-polyole mit einer Funktionalität von 3 bis 4.

Die erfindungsgemäß geeigneten Kettenverlängerungs- und Vernetzungsmittel (b) können einzeln oder in Form von Mischungen verwendet werden. Verwendbar sind auch Gemische aus Kettenverlängerungs- und Vernetzungsmitteln.

Zur Einstellung der Härte der PU-Elastomeren können die Aufbaukomponenten (a) und (b) in relativ breiten Mengenverhältnissen variiert werden, wobei die Härte mit zunehmendem Gehalt an difunktionellen Kettenverlängerungs- und mindestens trifunktionellen Vernetzungsmittel im PU-Elastomeren ansteigt.

In Abhängigkeit von der gewünschten Härte können die erforderlichen Mengen der Aufbaukomponenten (a) und (b) auf einfache Weise experimentell bestimmt werden. Vorteilhafterweise verwendet werden, bezogen auf das Gewicht der höhermolekularen Polyhydroxylverbindung (a), 5 bis 50 Gew.-% des Kettenverlängerungs- und/ oder Vernetzungsmittels (b), wobei zur Herstellung von harten PU-Elastomeren vorzugsweise 30 bis 50 Gew.-% eingesetzt werden.

c) Zur Herstellung der vorzugsweise mikrozellularen PU-Elastomeren finden erfindungsgemäß zwei organische Polyisocyanate Verwendung, von denen eines aus p-PDI besteht. Als von p-PDI verschiedene aromatische Diisocyanate werden verwendet Toluylen-diisocyanate, z.B. 2,4- und 2,6-TDI und handelsübliche Mischungen, Diphenylmethan-diisocyanate, z.B. 2,4'-, 2,2'- und vorzugsweise 4,4'-MDI und Mischungen aus mindestens zwei der genannten MDI-Isomeren, 3,3'-Dimethyldiphenyl-diisocyanate, z.B. 3,3'-Dimethyl-4,4'-diisocyanato-diphenyl (TODI), 1,2-Diphenylethan-diisocyanate, z.B. 2,4'-, 2,2'- und vorzugsweise 4,4'-DIBDI und Mischungen aus mindestens zwei der genannten DIBDI-Isomeren. Aufgrund seiner guten Verarbeitbarkeit und den damit erzielbaren sehr guten mechanischen Eigenschaften der Elastomeren findet insbesondere 4,4'-MDI in Verbindung mit p-PDI zur Herstellung vorzugsweise mikrozellularen PU-Elastomeren Verwendung. Das Molverhältnis von p-PDI zu den aromatischen Diisocyanaten aus der Gruppe TDI, MDI, TODI und DIBDI kann über einen breiten Bereich, z.B. p-PDI zu aromatischen Diisocyanaten von 1:0,1 bis 1:10, vorzugsweise von 1:0,11 bis 1:9 und insbesondere 1:1 bis 1: 4 variiert werden, ohne daß die statischen und dynamischen Kennwerte sich wesentlich verändern. Bei Verwendung von p-PDI und 4,4'-MDI, der vorzugsweise eingesetzten Kombination, liegt das p-PDI/4,4'-MDI-Molverhältnis zweckmäßigerweise im Bereich von 1:0,1 bis 1:10, vorzugsweise von 1:0,11 bis 1:9 und insbesondere von 1:1 bis 1:4. Die aromatischen Diisocyanate können, falls erforderlich, einzeln aufgeschmolzen und gemischt oder gemischt und gemeinsam aufgeschmolzen und als Schmelze zur Herstellung der PU-Elastomeren verwendet werden oder es kann das feste Diisocyanat in die Schmelze des anderen Diisocyanats eingebracht und dort aufgeschmolzen und gelöst werden. Nach der letztgenannten Verfahrensform wird üblicherweise festes p-PDI (Schmelzpunkt 94°C) in eine 4,4'-MDI-Schmelze eingebracht und unter Schmelzen gelöst.

Anstelle der aromatischen Diisocyanate oder im Gemisch mit diesen können zur Herstellung der zelligen PU-Elastomeren auch aliphatische Diisocyanate mit 4 bis 12 Kohlenstoffatomen, vorzugsweise 4 bis 6 Kohlenstoffatomen im verzweigtkettigen oder vorzugsweise linearen Alkylenrest und/oder cycloaliphatische Diisocyanate mit 6 bis 18 Kohlenstoffatomen, vorzugsweise 6 bis 10 Kohlenstoffatomen im gegebenenfalls alkylsubstituierten Cycloalkylenrest verwendet werden. Als aliphatische Diisocyanate beispielhaft genannt seien 1,12-Dodecan-, 2-Ethyl-1,4-butan-, 2-Methyl-1,5-pentan-, 1,4-Butan-diisocyanat und vorzugsweise 1,6-Hexamethylen-diisocyanat (HDI). Als cycloaliphatische Diisocyanate kommen beispielsweise in Betracht: Cyclohexan-1,3- und -1,4-diisocyanat, 2,4- und 2,6-Hexahydrotoluylen-diisocyanat, 4,4'-, 2,4'- und 2,2'- Dicyclohexylmethan-diisocyanat und vorzugsweise 1-Isocyanato-3,3,5-trimethyl-5-isocyanato-methylcyclohexan (Isophoron-diisocyanat, IPDI).

In der vorliegenden Erfindung werden als Komponente c) organische Polyisocyanatprepolymere verwendet. Diese können hergestellt werden durch Umsetzung einer Teilmenge oder der Gesamtmenge mindestens einer höhermolekularen Polyhydroxylverbindung (a) oder einer Teilmenge oder der Gesamtmenge der Mischung aus (a) und mindestens einem niedermolekularen Kettenverlängerungs- und/oder Vernetzungsmittel (b) mit mindestens einem aromatischen Diisocyanat aus der Gruppe TDI, MDI, TODI, DIBDI, vorzugsweise mit 4,4'-MDI und/ oder HDI und/oder IPDI zu einem Urethangruppen, vorzugsweise Urethan- und Isocyanatgruppen aufweisenden Polyadditionsprodukt mit einem NCO-Gehalt von 0,05 bis 8,0 Gew.-%, vorzugsweise von 1,2 bis 7,5 Gew.-% und dessen Umsetzung mit p-PDI zu Polyisocyanatprepolymeren.

Zur Herstellung der Urethan- und Isocyanatgruppen aufweisenden Polyadditionsprodukte verwendet man die Aufbaukomponenten (a), gegebenenfalls (b) und die Diisocyanate vorteilhafterweise in solchen Mengen, daß das Äquivalenzverhältnis der Hydroxylgruppen von (a) oder (a) und (b) zu Isocyanatgruppen der aromatischen Diisocyanate TDI, MDI, TODI, DIBDI, vorzugsweise 4,4'-MDI, und/oder HDI und/oder IPDI 1 : größer als 1 bis 6, vorzugsweise 1:1,01 bis 4 beträgt. Die Urethan- und Isocyanatgruppen aufweisenden Polyadditionsprodukte werden danach durch Umsetzung mit einer solchen Menge p-PDI, das in einem Schritt oder vorzugsweise portionsweise in mehreren Schritten, vorzugsweise z.B. in 2 Schritten zur Reaktion gebracht werden kann, in die Polyisocyanatprepolymeren übergeführt, so daß das Äquivalenzverhältnis der Hydroxylgruppen von (a) oder (a) und (b) zu Isocyanatgruppen von p-PDI 1:0,02 bis 6, vorzugsweise 1:0,1 bis 5 und insbesondere 1:0,2 bis 3 beträgt.

Wie bereits ausgeführt wurde, können zur Herstellung der Polyisocyanatprepolymeren Mischungen aus (a) und (b) verwendet werden. Nach einer bevorzugt angewandten Ausführungsform werden die Isocyanatgruppen enthaltenden Prepolymeren jedoch hergestellt durch Umsetzung von ausschließlich höhermolekularen Polyhydroxylverbindungen (a) mit den genannten Diisocyanaten, vorzugsweise mit 4,4'-MDI und p-PDI. Insbesondere geeignet hierfür sind difunktionelle Polyhydroxylverbindungen mit einem Molekulargewicht von 800 bis 6.000, vorzugsweise von größer als 800 bis 3.500 und insbesondere von 1.000 bis 3.300, die ausgewählt werden aus der Gruppe der Polyester-polyole, der hydroxylgruppenhaltigen Polycarbonate und Polyoxytetramethylen-glykole.

Bei Verwendung von 4,4'-MDI und p-PDI als aromatische Diisocyanate haben sich hierbei Äquivalenzverhältnisse der Hydroxylgruppen von (a) und (b), vorzugsweise von ausschließlich (a), zu NCO-Gruppen des 4,4'-MDI zu NCO-Gruppen des p-PDI von 1 : größer als 1 bis 6:0,02 bis 6 bewährt.

Die erfindungsgemäß verwendbaren Isocyanatgruppen aufweisenden Prepolymeren, die nach obengenannten Verfahren hergestellt werden, besitzen vorteilhafterweise Isocyanatgehalte von 3,3 bis 10 Gew.-%, vorzugsweise von 3,5 bis 9 Gew.-%, bezogen auf ihr Gesamtgewicht.

Zur Herstellung der Polyisocyanatprepolymeren können die höhermolekularen Polyhydroxylverbindungen (a) oder Mischungen aus (a) und niedermolekularen Kettenverlängerungs- und/oder Vernetzungsmitteln (b) mit den organischen Diisocyanaten, z.B. in Form einer p-PDI-haltigen aromatischen Diisocyanatmischung oder vorzugsweise stufenweise, wobei zunächst mindestens ein aromatisches Diisocyanat aus der Gruppe TDI, MDI, TODI, DIBDI, vorzugsweise 4,4'-MDI und danach p-PDI eingesetzt wird, bei Temperaturen von 80 bis 160°C, vorzugsweise von 90 bis 150°C, zur Reaktion gebracht werden.

Nach einer Verfahrensweise, die bevorzugt angewandt wird, kann die Komponente (a) oder eine Mischung aus (a) und (b) z.B. auf 140°C erwärmt und bei dieser Temperatur z.B. das aromatische Diisocyanat, vorzugsweise die gesamte Menge des auf 50°C erwärmten 4,4'-MDI, hinzugefügt werden. Unmittelbar nach der 4,4'-MDI-Zugabe kann das gesamte p-PDI einverleibt oder es können nach und nach Teilmengen p-PDI hinzugefügt werden, wobei es sich als vorteilhaft erwiesen hat, eine Teilmenge p-PDI unmittelbar nach der 4,4'-MDI-Zugabe und die andere (n) Teilmenge(n) in der Abkühlphase der Reaktionsmischung einzuverleiben.

Nach Erreichen des theoretisch berechneten Isocyanatgehaltes wird die Reaktion beendet. Hierfür sind üblicherweise Reaktionszeiten im Bereich von 10 bis 200 Minuten, vorzugsweise von 15 bis 150 Minuten erforderlich.

Die Polyisocyanatprepolymeren können in Gegenwart von Katalysatoren hergestellt werden. Es ist jedoch auch möglich, die Polyisocyanatprepolymeren
in Abwesenheit von Katalysatoren herzustellen und diese der Reaktionsmischung zur Herstellung der PU-Elastomeren einzuverleiben.

d) Als Katalysatoren (d) werden zweckmäßigerweise Verbindungen verwendet, die die Reaktion der Hydroxylgruppen enthaltenden Verbindungen der Komponenten (a) und gegebenenfalls (b) mit den Polyisocyanaten (c) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinn-dilaurat, Dibutylzinn-maleat und Dioctylzinn-diacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetraalkyl-alkylendiamine, wie z.B. N,N,N',N'-Tetramethylethylendiamin, N,N,N',N'-Tetramethyl-butandiamin oder -hexandiamin, Pentamethyl-diethylentriamin, Tetramethyl-diaminoethylether, Bis-(dimethylaminopropyl)-harnstoff, 1,4-Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Vorzugsweise verwendet werden 0,001 bis 3 Gew.-%, insbesondere 0,01 bis 1 Gew.-% Katalysator bzw. Katalysatorkombination bezogen auf das Gewicht der Aufbaukomponenten (a), (c) und gegebenenfalls (b).

e) Das erfindungsgemäße Verfahren führt zur Herstellung von zelligen, vorzugsweise mikrozellularen PU-Elastomeren. Als Treibmittel (e) findet hierfür Wasser Verwendung, das mit den organischen Polyisocyanaten und vorzugsweise Isocyanatgruppen aufweisenden Prepolymeren (a) in situ unter Bildung von Kohlendioxid und Aminogruppen reagiert, die ihrerseits mit den Isocyanatprepolymeren zu Harnstoffgruppen weiterreagieren und hierbei als Kettenverlängerungsmittel wirken.

Da die Aufbaukomponenten (a) und gegebenenfalls (b) aufgrund der Herstellung und/oder chemischen Zusammensetzung Wasser aufweisen können, bedarf es in manchen Fällen keiner separaten Wasserzugabe zu den Aufbaukomponenten (a) und gegebenenfalls (b) oder der Reaktionsmischung. Sofern jedoch der Polyurethan-Formulierung zusätzlich Wasser einverleibt werden muß zur Erzielung des gewünschten Raumgewichts, wird dieses üblicherweise in Mengen von 0,001 bis 3,0 Gew.-%, vorzugsweise von 0,01 bis 2,0 Gew.-% und insbesondere von 0,2 bis 1,2 Gew.-%, bezogen auf das Gewicht der Aufbaukomponente (a) bis (c), verwendet.

Als Treibmittel (e) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C besitzen, oder Gase als physikalisch wirkende Treibmittel oder chemisch wirkende Treibmittel eingesetzt werden.

Die als Treibmittel geeigneten Flüssigkeiten der oben genannten Art und Gase können z.B ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, tert. -Butylmethylether, Cycloalkylenether, wie z.B. Furan, Ketone, wie z.B. Aceton, Methylethylketon, Acetale und/oder Ketale, wie z.B. Formaldehyddimethylacetal, 1,3-Dioxolan und Acetondimethylacetal, Carbonsäureester, wie z.B. Ethylacetat, Methylformiat und Ethylen-Acrylsäuretertiärbutylester, tertiäre Alkohole, wie z.B. tertiär Butanol, Fluoralkane, die in der Trophosphäre abgebaut werden und deshalb für die Ozonschicht unschädlich sind, wie z. B. Trifluormethan, Difluormethan, Difluorethan, Tetrafluorethan und Heptafluorethan, Chloralkane, wie z.B. 2-Chlorpropan, und Gase, wie z.B. Stickstoff, Kohlenmonoxid und Edelgase wie z.B. Helium, Neon und Krypton und analog Wasser chemisch wirkende Treibmittel wie Carbonsäuren, wie z.B. Ameisensäure, Essigsäure und Propionsäure.

Von den als Treibmittel (e) geeigneten, bezüglich NCO-Gruppen inerten Flüssigkeiten werden vorzugsweise Alkane mit 4 bis 8 C-Atomen, Cycloalkane mit 4 bis 6 C-Atomen oder Mischungen mit einem Siedepunkt von -40 bis 50°C unter Atmosphärendruck aus Alkanen und Cycloalkanen verwendet. Insbesondere eingesetzt werden $C_5$-(Cyclo)alkane wie z.B. n-Pentan, iso-Pentane und Cyclopentan und ihre technischen Mischungen.

Als Treibmittel geeignet sind ferner Salze, die sich thermisch zersetzen, wie z.B. Ammoniumbicarbonat, Ammoniumcarbamat und/oder Ammoniumsalze organischer Carbonsäuren, wie z.B. die Monoammoniumsalze der Malonsäure, Borsäure, Ameisensäure oder Essigsäure.

Die zweckmäßigste Menge an festen Treibmitteln, niedrigsiedenden Flüssigkeiten und Gasen, die jeweils einzeln oder in Form von Mischungen, z.B. als Flüssigkeits- oder Gasmischungen oder als Gas-Flüssigkeitsmischungen eingesetzt werden können, hängt von der Dichte ab, die man erreichen will und der eingesetzten Menge an Wasser. Die erforderlichen Mengen können durch einfache Handversuche leicht ermittelt werden. Zufriedenstellende Ergebnisse liefern üblicherweise Feststoffmengen von 0,5 bis 35 Gew.-Teilen, vorzugsweise von 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (a), (c) und gegebenenfalls (b). Die Gasbeladung mit z.B. Luft, Kohlendioxid, Stickstoff und/oder Helium kann sowohl über die höhermolekularen Kettenverlängerungs- und/oder Vernetzungsmittel (b) als auch über die Polyisocyanate (c) oder über (a) und (c) und gegebenenfalls (b) erfolgen.

Als Treibmittel keine Anwendung finden, wie bereits ausgeführt wurde, Perfluorchlorkohlenwasserstoffe.

f) Der Reaktionsmischung zur Herstellung der zelligen PU-Elastomeren können gegebenenfalls auch noch Zusatzstoffe (f) einverleibt werden. Genannt seien beispielsweise oberflächenaktive Substanzen, Schaumstabilisatoren, Zellregler, Füllstoffe, Flammschutzmittel, Keimbildungsmittel, Oxidationsverzögerer, Stabilisatoren, Gleit- und Entformungshilfsmittel, Farbstoffe und Pigmente.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie z.B. die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der höhermolekularen Polyhydroxylverbindungen (a) angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Blähgraphit, Kollophonium, Cyclopentadienylharze und Pfropfpolymerisate.

Als verstärkend wirkende Füllstoffe finden vorzugsweise Anwendung Fasern, beispielsweise Kohlefasern oder insbesondere Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Geeignete Glasfasern, z.B. auch in Form von Glasgeweben, -matte, -vliesen und/oder vorzugsweise Glasseidenrovings oder geschnittener Glasseide aus alkaliarmen E-Glasern mit einem Durchmesser von 5 bis 200 μm, vorzugsweise 6 bis 15 μm eingesetzt werden, weisen nach ihrer Einarbeitung in die Formmassen im allgemeinen eine mittlere Faserlänge von 0,05 bis 1 mm, vorzugsweise von 0,1 bis 0,5 mm auf.

Die anorganischen und organischen Füllstoffe können einzeln oder als Gemische verwendet werden und werden der Reaktionsmischung üblicherweise in Mengen von 0,5 bis 50 Gew.-%, vorzugsweise 1 bis 30 Gew.-%, bezogen auf das Gewicht der Aufbaukomponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel wie roter Phosphor, Aluminiumoxidhydrat, Antimontrioxid, Arsentrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke und/oder Blähgraphit zum Flammfestmachen der erfindungsgemäß hergestellten PU-Elastomeren verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Aufbaukomponenten (a) bis (c) zu verwenden.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf das Gesamtgewicht der Aufbaukomponenten (a) bis (c), eingesetzt werden.

Geeignete Oxidationsverzögerer und Wärmestabilisatoren, die den erfindungsgemäßen PU-Elastomeren zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentration bis zu 1 Gew.-%, bezogen auf das Gewicht der Aufbaukomponenten (a) bis (c), verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.-%, bezogen auf das Gewicht der Aufbaukomponenten (a) bis (c), eingesetzt werden.

Gleit- und Entformungsmittel, die in der Regel ebenfalls in Mengen bis zu 1 Gew.-%, bezogen auf das Gewicht der Aufbaukomponenten (a) bis (c), zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Nähere Angaben über die oben genannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1., 2. und 3. Auflage, 1966, 1983 und 1993 zu entnehmen.

Zur Herstellung der zelligen PU-Elastomeren können in Gegenwart oder Abwesenheit von Katalysatoren (d), physikalisch wirkenden Treibmitteln (e) und Zusatzstoffen (f), die höhermolekularen Polyhydroxylverbindungen (a), gegebenenfalls niedermolekularen Kettenverlängerungs- und/oder Vernetzungsmittel (b) sowie gegebenenfalls die chemisch wirkenden Treibmittel, vorzugsweise Wasser und organischen Polyisocyanate (c) oder vorzugsweise die isocyanatgruppenhaltigen Prepolymeren aus (a), (b) und (c) oder vorzugsweise aus (a) und (c) und Kettenverlängerungs- und/oder Vernetzungsmittel (b), Mischungen aus Teilmengen (a) und (b), Mischungen aus Teilmengen (a), (b) und Wasser oder vorzugsweise Mischungen aus (b) und Wasser oder Wasser in solchen Mengen zur Umsetzung gebracht werden, daß das Äquivalenzverhältnis von NCO-Gruppen der Polyisocyanate (c) oder isocyanatgruppenhaltigen Prepolymeren zur Summe der reaktiven Wasserstoffe der Komponenten (a) und gegebenenfalls (b) sowie gegebenenfalls der chemisch wirkenden Treibmittel 0,8 bis 1,2 : 1, vorzugsweise 0,95 bis 1,15 : 1 und insbesondere 1,00 bis 1,05 : 1 beträgt.

Die zelligen PU-Elastomeren können nach den in der Literatur beschriebenen Verfahren, wie z.B. dem one shot- oder vorzugsweise Prepolymer-Verfahren, mit Hilfe bekannter Mischvorrichtungen hergestellt werden.

Zur Herstellung der zelligen PU-Elastomeren können die Ausgangskomponenten in Gegenwart von Treibmitteln (e) üblicherweise bei einer Temperatur von 80 bis 160°C, vorzugsweise von 110 bis 150°C homogen gemischt, die Reaktionsmischung in ein offenes, gegebenenfalls temperiertes Formwerkzeug eingebracht werden. Nach der Befüllung wird das Formwerkzeug geschlossen und die Reaktionsmischung unter Verdichtung, z.B. mit einem Verdichtungsgrad von 1,1 bis 8, vorzugsweise von 1,2 bis 6 und insbesondere von 2 bis 4 zur Bildung von Formkörpern aufschäumen gelassen. Sobald die Formkörper eine ausreichende Festigkeit besitzen, werden diese entformt. Die Entformzeiten sind u.a. abhängig von der Formwerkzeugtemperatur, -geometrie und der Reaktivität der Reaktionsmischung und liegen üblicherweise in einem Bereich von 10 bis 60 Minuten.

Die nach dem erfindungsgemäßen Verfahren hergestellten zelligen PU-Elastomeren zeigen Dichten von 0,2 bis 1,1 g/cm$^3$, vorzugsweise von 0,35 bis 0,80 g/cm$^3$.

Die nach dem erfindungsgemäßen Verfahren hergestellten PU-Elastomeren finden Verwendung zur Herstellung von Formkörpern, vorzugsweise für den Maschinenbau und den Verkehrsmittelsektor. Die zelligen PU-Elastomeren eignen sich insbesondere zur Herstellung von Dämpfungs- und Federelementen z.B. für Verkehrsmittel, vorzugsweise Kraftfahrzeuge, Puffern und Deckschichten.

Beispiele

Vergleichsbeispiel I

a) Herstellung eines Isocyanatgruppen aufweisenden Prepolymeren auf 1,5-NDI-Basis

1.000 Gew.-Teile (0,5 mol) eines Poly(ethandiol(0,5 mol)-1,4-butandiol(0,5 mol)-adipats(1 mol)) mit einem durchschnittlichen Molekulargewicht von 2.000 (errechnet aus der experimentell ermittelten Hydroxylzahl) wurden auf 140°C erwärmt und bei dieser Temperatur mit 240 Gew.-Teilen (1,14 mol) festem 1,5-NDI unter intensivem Rühren versetzt und zur Reaktion gebracht.

Man erhielt ein Prepolymeres mit einem NCO-Gehalt von 4,32 Gew.-% und einer Viskosität bei 90°C von 2.800 mPa·s (gemessen mit einem Rotationsviskosimeter der Firma Haake, mit dem auch die Viskositäten der folgenden Vergleichsbeispiele und Beispiele gemessen wurden.).

b) Herstellung zelliger Formteile

Vernetzerkomponente, die bestand aus

| | |
|---|---|
| 20,7 | Gew.-Teilen 2,2',6,6'-Tetraisopropyldiphenyl-carbodiimid, |
| 2,9 | Gew.-Teilen eines Gemisches aus ethoxylierter Öl- und Ricinolsäure mit durchschnittlich 9 Oxyethyleneinheiten, |
| 3,8 | Gew.-Teilen des Monoethanolaminsalzes der n-Alkylbenzolsulfonsäure mit $C_9$- bis $C_{15}$-Alkylresten, |
| 36,3 | Gew.-Teilen Natriumsalz von sulfatiertem Ricinusöl, |
| 36,3 | Gew.-Teilen Wasser und |
| 0,03 | Gew.-Teilen einer Mischung aus 30 Gew.-% Pentamethyl-diethylentriamin und 70 Gew.-% N-Methyl-N'-(dimethylaminomethyl)-piperazin. |

100 Gew.-Teile des auf 90°C temperierten Isocyanatprepolymeren, hergestellt nach Vergleichsbeispiel Ia, wurden mit 2,4 Gew.-Teilen der Vernetzerkomponenten ca. 8 Sekunden lang intensiv gerührt. Die Reaktionsmischung wurde danach in ein auf 80°C temperiertes, verschließbares, metallisches Formwerkzeug eingefüllt, das Formwerkzeug verschlossen und die Reaktionsmischung aushärten gelassen. Nach 25 Minuten wurde der mikrozellulare Formkörper entformt und zur thermischen Nachhärtung bei 110°C 16 Stunden getempert.

Vergleichsbeispiel II

a) Herstellung eines Isocyanatgruppen aufweisenden Prepolymeren auf 4,4'-MDI-Basis

Man verfuhr analog den Angaben des Vergleichsbeispiels Ia, verwendete jedoch anstelle von 1,5-NDI 380 Gew.-Teile (1,52 mol) auf 50°C temperiertes 4,4'-MDI.

Man erhielt ein Prepolymer mit einem NCO-Gehalt von 6,19 Gew.-% und einer Viskosität bei 90°C von 1.600 mPa·s (gemessen mit einem Rotationsviskosimeter).

b) Herstellung einer zelligen Prüfplatte

100 Gew.-Teile des Prepolymeren nach Vergleichsbeispiel IIa und 3,42 Gew.-Teile der Vernetzerkomponente nach Vergleichsbeispiel Ib wurden analog den Angaben des Vergleichsbeispiel I umgesetzt und die Reaktionsmischung zu Prüfplatten geformt. Die reaktionsmischung ließ sich nicht zu Prüffedern für die dynamische Prüfung verarbeiten.

Vergleichsbeispiel III

a) Herstellung eines Isocyanatgruppen aufweisenden Prepolymeren auf 4,4'-MDI-Basis

Eine Mischung aus 1.000 Gew.-Teilen des in Vergleichsbeispiel I beschriebenen Poly(ethandiol-1,4-butandioladipats) und 3 Gew.-Teilen Trimethylolpropan wurde analog den Angaben von Vergleichsbeispiel II mit 380 Gew. -Teilen (1,52 mol) auf 50°C temperiertem 4,4'-MDI umgesetzt.

Man erhielt ein Prepolymer mit einem NCO-Gehalt von 5,80 Gew.-% und einer Viskosität bei 90°C von 1.750 mPa·s (gemessen mit einem Rotationsviskosimeter).

b) Herstellung zelliger Formteile

Aus 100 Gew.-Teilen des Prepolymeren nach Vergleichsbeispiel IIIa und 3,1 Gew.-Teilen der Vernetzerkomponente nach Vergleichsbeispiel Ib wurden analog den Angaben des Vergleichsbeispiels I Formkörper hergestellt.

Vergleichsbeispiel IV

a) Herstellung eines Isocyanatgruppen aufweisenden Prepolymers auf p-PDI-Basis

1000 Gew.-Teile (0,5 mol) eines Poly(ethandiol(0,5 mol) -1,4- butandiol (0,5 mol) -adipats (1 mol)) mit einem durchschnittlichen Molekulargewicht von 2000 (errechnet aus der experimentell ermittelten Hydroxylzahl) wurden auf 100°C erwärmt und bei dieser Temperatur mit 183 Gew.-Teilen (1,14 mol) festem p-PDI unter intensivem Rühren versetzt und zur Reaktion gebracht.

Man erhielt ein Prepolymer mit einem NCO-Gehalt von 4,40 Gew.-% und einer Viskosität bei 80°C von 2900 mPas (gemessen mit einem Rotationsviskosimeter).

b) Herstellung zelliger Formteile

Aus 100 Gew.-Teilen des Prepolymers nach Vergleichsbeispiel IVa und 2,43 Gew.-Teilen der Vernetzerkomponente nach Vergleichsbeispiel Ib wurden analog den Angaben des Vergleichsbeispiels I, jedoch mit dem auf 80°C temperierten Isocyanatprepolymeren aus Vergleichsbeispiel IVa Formkörper hergestellt, die erst nach einer Formstandzeit von 60 Minuten entformt und zur thermischen Nachhärtung bei 110°C 16 Stunden getempert wurden.

Beispiel 1

a) Herstellung eines Isocyanatgruppen aufweisenden Prepolymers auf 4,4'-MDI/p-PDI-Basis

1000 Gew.-Teile (0,5 mol) eines Poly(ethandiol(0,5 mol)-1,4-butandiol(0,5 mol)-adipats(1 mol)) mit einem durchschnittlichen Molekulargewicht von 2000 (errechnet aus der experimentell ermittelten Hydroxylzahl) wurden auf 130°C erwärmt, unter intensivem Rühren 174 Gew.-Teile (0,696 mol) auf 50°C temperiertes 4,4'-MDI und unmittelbar danach 55,75 Gew.-Teile (0,348 mol) festes p-PDI hinzugefügt. Nach einer Reaktionszeit von ca. 15 Minuten erhielt man ein Urethan- und Isocyanatgruppen aufweisendes Polyadditionsprodukt mit einem NCO-Gehalt von 3,7 Gew.-%, das bei 97°C mit zusätzlichen 55,75 Gew.-Teilen (0,348 mol) festem p-PDI umgesetzt wurde und in ca. 30 Minuten unter Rühren auf 80°C abgekühlt wurde.

Man erhielt ein Prepolymer mit einem NCO-Gehalt von 5,77 % und einer Viskosität bei 80°C von 3000 mPas (gemessen mit einem Rotationsviskosimeter).

b) Herstellung zelliger Formkörper

100 Gew.-Teile des auf 80°C temperierten Isocyanatprepolymers auf 4,4'-MDI/p-PDI-Basis, hergestellt nach Beispiel 1a, wurden unter intensivem Rühren mit 3,21 Gew.-Teilen der Vernetzerkomponente, hergestellt nach Vergleichsbeispiel Ib, gemischt.

Nach einer Rührzeit von ca. 8 Sekunden wurde die Reaktionsmischung in ein auf 80°C temperiertes, verschließbares metallisches Formwerkzeug eingefüllt, das Formwerkzeug verschlossen und die Reaktionsmischung aushärten lassen. Nach 60 Minuten Formstandzeit wurde der mikrozellulare Formkörper entformt und zur thermischen Nachhärtung bei 110°C 16 Stunden lang getempert.

Beispiel 2

a) Herstellung eines Isocyanatgruppen aufweisenden Prepolymeren auf 4,4'-MDI/p-PDI-Basis

Man verfuhr analog den Angaben des Beispiels 1, versetzte jedoch die 1000 Gew.-Teile (0,5 mol) des Poly(ethandiol-1,4-butandiol-adipats) zunächst mit 174 Gew.-Teilen (0,696 mol) 4,4'-MDI und unmittelbar danach mit 111,5 Gew.-Teilen (0,696 mol) p-PDI.

Nach einer Reaktionszeit von ca. 60 Minuten in einem Temperaturbereich von 130-90°C erhielt man ein Prepolymer mit einem NCO-Gehalt von 5,70 Gew.-% und einer Viskosität bei 80°C von 3000 mPas (gemessen mit einem Rotationsviskosimeter).

b) Herstellung zelliger Formkörper

Die Herstellung der zelligen Formkörper erfolgte unter Verwendung des Prepolymeren nach Beispiel 2a analog zu den Angaben des Beispiels 1b

An den nach Angaben der Vergleichsbeispiele Ib bis IVb und Beispiele 1 bis 2 hergestellten zelligen Formteilen wurden die statischen und dynamischen mechanischen Eigenschaften der mikrozellularen PU-Elastomeren gemessen.

Die statischen mechanischen Eigenschaften wurden anhand der Zugfestigkeit nach DIN 53 571, der Bruchdehnung nach DIN 53 571, der Weiterreißfestigkeit nach DIN 53 515 und dem Druckverformungsrest bei 80°C in Abwandlung zur DIN 53 572 unter Verwendung von 18 mm hohen Abstandsstücken und Prüfkörpern mit einer Grundfläche von 40 x 40 mm und einer Höhe von $30 \pm 1$ mm gemessen. Die Berechnung des Druckverformungsrestes (DVR) erfolgte nach der Gleichung

$$DVR = \frac{Ho - H_2}{Ho - H_1} \cdot 100 \ [\%]$$

in der bedeutet

Ho die ursprüngliche Höhe des Prüfkörpers in mm,
$H_1$ die Höhe des Prüfkörpers in verformten Zustand in mm und
$H_2$ die Höhe des Prüfkörpers nach der Entspannung in mm.

Die dynamische mechanischen Eigenschaften werden bestimmt anhand der Wegzunahme (WZ) bei maximaler Krafteinwirkung und dem Setzbetrag (SB) (Figur). Der Formkörper zur Messung des Setzbetrages bestand aus einer zylinderischen Prüffeder mit 3 Segmenteinschnürungen mit einer Höhe von 100 mm, einem Außendurchmesser von 50 mm und einem Innendurchmesser von 10 mm. Nach Belastung der Feder über 100.000 Lastwechsel mit einer Kraft von 6 kN und einer Frequenz von 1,2 Hz wird der SB gemessen als Differenz zwischen Ausgangs- und Endwert der Prüffederhöhe und angegeben in Prozent. Der Setzbetrag ist ein Maß für die bleibende Verformung des zelligen PU-Elastomeren während des Dauerschwingversuches. Je kleiner dieser Setzbetrag ist, desto größer ist die dynamische Leistungsfähigkeit des Materials.

Die Ermittlung der Höhe $H_R$ zur Bestimmung des Setzbetrages nach dynamischer Prüfung erfolgt nach Aufnahme der Kennlinie der Feder: $H_0$ ist die Ausgangshöhe; der Formkörper wird 3x mit maximaler Kraft vorgedrückt (gemäß Kennlinien maximal Kraft) dann im 4. Zyklus die Kennlinie aufgenommen mit V=50 mm/min. Eindrückgeschwindigkeit. Nach 10 min. wird $H_1$ bestimmt; das ist die Höhe des Bauteils nach Aufnahme der Kennlinie. Erst danach startet die dynamische Prüfung.

$H_R$ = Resthöhe nach dynamischer Prüfung gemessen nach 24 h Lagerung bei 23°C/50 % rel. Luftfeuchte nach Ende der dynamischen Prüfung. Als Bezugspunkt (=Ausgangshöhe) zur Ermittlung des permanenten Setzbetrages nach dynamischer Prüfung wird aber $H_0$, die Höhe der Feder in völlig "neuwertigem" Zustand, ohne jede Kompression, genommen:

$$SB = \frac{H_0 - H_R}{H_o} \ x \ 100 \ [\%]$$

Die dynamische Prüfung wird ohne zusätzliche Kühlung in einem klimatisierten Raum bei 23°C und 50 % relative Luftfeuchtigkeit durchgeführt. Die an den Prüfkörpern gemessenen mechanischen Eigenschaften sind in der folgenden Tabelle zusammengefaßt.

Tabelle

| Statische und dynamische mechanische Eigenschaften der zelligen PU-Elastomeren gemäß Vergleichsbeispielen I bis IV und Beispielen 1 bis 2 | | | | | | |
|---|---|---|---|---|---|---|
| Beispiel Vergleichsbeispiel | I | II | III | IV | 1 | 2 |
| IsocyanatprepolymerDiisocyanatbasis | NDI | MDI | MDI | p-PDI | MDI/ p-PDI | MDI/ p-PDI |
| NCO-Gehalt [%] | 4,32 | 6,19 | 5,8 | 4,40 | 5,77 | 5,70 |
| Viskosität 90°C [mPa·s] | 2.800 | 1.600 | 1.750 | 2.900 (80°C) | 3.000 (80°C) | 3.000 (80°C) |
| Statisch- mechanische Eigenschaften | | | | | | |
| Druckverformungsrest [80°C,%] | 20 | 43 | 20 | 17 | 20 | 22 |
| Zugfestigkeit [N/mm$^2$] | 3,6 | 4,5 | 4,3 | 4,1 | 4,5 | 4,6 |
| Dehnung [%] | 350 | 510 | 460 | 630 | 600 | 610 |
| Weiterreißfestigkeit [N/mm] | 16,2 | 19,9 | 17,3 | 17,4 | 17,5 | 17,3 |
| Dynamisch-mechanische Eigenschaften | | | | | | |
| Setzbetrag [%] | 8 | - | 16-18 | 6,2-7,2 | 12 | 11,7 |
| Wegzunahme [mm] | 1,4-2,1 | - | 5,0-5,7 | 1,8-2,1 | 3,0 | 2,9 |

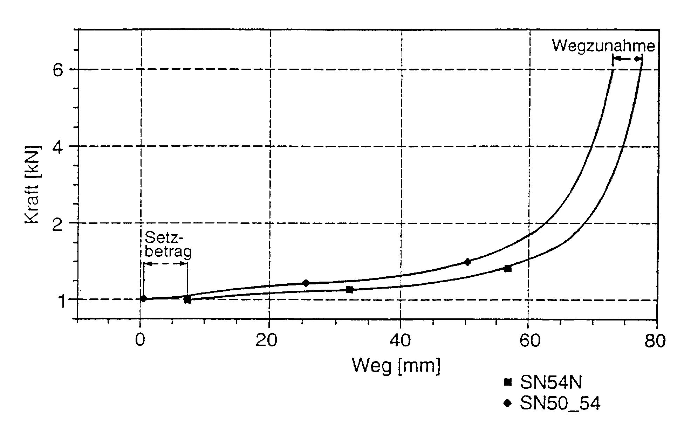

**Patentansprüche**

1. Verfahren zur Herstellung von zelligen Polyurethan-Elastomeren durch Umsetzung von

 a) Polyhydroxylverbindungen mit einer Funktionalität von 2 bis 3 und einem Molekulargewicht von 800 bis 6000 und

 b) gegebenenfalls Kettenverlängerungs- und/oder Vernetzungsmitteln mit einem Molekulargewicht bis 800 mit

 c) organischen Polyisocyanatprepolymeren

 d) gegebenenfalls Katalysatoren,

 e) Treibmitteln und

 f) gegebenenfalls Zusatzstoffen,

 **dadurch gekennzeichnet, daß** man organische Polyisocyanatprepolymere verwendet, die erhältlich sind durch Umsetzung von mindestens einem aromatischen Diisocyanat, ausgewählt aus der Gruppe Toluylen-diisocyanat, Diphenylmethan-diisocyanat, 3,3'-Dimethyl-diphenyl-diisocyanat, 1,2-Diphenylethan-diisocyanat und/oder aliphatisches Diisocyanat mit 4 bis 12 Kohlenstoffatomen und/oder cycloaliphatisches Diisocyanat mit 6 bis 18 Kohlenstoffatomen mit der Komponente a) oder einer Mischung der Komponenten a) und b) im Äquivalenzverhältnis der Hydroxylgruppen von a) oder a) und b) von 1 : größer als 1 bis 6 zu einem Urethan- und Isocyanatgruppen enthaltenden Polyadditionsprodukt und anschließender Reaktion des Polyadditionsproduktes mit 1,4-Phenyldiisocyanat im Äquivalenzverhältnis von Hydroxylgruppen von a) oder a) und b) von 1 : 0,02 bis 6 zu Polyisocyanatprepolymeren.

2. Verfahren nach Anspruch 1, **dadurch gekennzeichnet, daß** die Polyhydroxylverbindungen a) difunktionell sind, ein Molekulargewicht von 800 bis 3.500 besitzen und ausgewählt sind aus der Gruppe der Polyester-polyole, hydroxylgruppenhaltigen Polycarbonate und Polyoxybutylen-glykole.

3. Verfahren nach Anspruch 1 oder 2, **dadurch gekennzeichnet, daß** als aromatisches Diisocyanat Diphenylmethan-diisocyanat verwendet wird.

4. Verfahren nach einem der Ansprüche 1 bis 3, **dadurch gekennzeichnet, daß** das Treibmittel (e) ausgewählt wird aus der Gruppe der Alkane mit 4 bis 8 C-Atomen, der Cycloalkane mit 4 bis 6 C-Atomen und Wasser oder einem Gemisch davon.

5. Verfahren nach einem der Ansprüche 1 bis 4, **dadurch gekennzeichnet, daß** die resultierende PU-Elastomere eine Dichte von 0,2 bis 1,1 g/l besitzen.

6. Polyisocyanatprepolymere mit einem NCO-Gehalt von 3,3 bis 10 Gew.-%, hergestellt durch Umsetzung mindestens einer Polyhydroxylverbindung mit einer Funktionalität von 2 bis 3 und einem Molekulargewicht von 800 bis 6000 (a) oder einer Mischung aus (a) und einem Kettenverlängerungs- und/oder Vernetzungsmittel mit einem Molekulargewicht bis 800 (b) mit mindestens einem aromatischen Diisocyanat, ausgewählt aus der Gruppe Toluylen-diisocyanat, Diphenylmethan-diisocyanat, 3,3'-Dimethyl-diphenyl-diisocyanat, 1,2-Diphenylethan-diisocyanat, und/oder 1,6-Hexamethylen-diisocyanat und/oder 1-Isocyanato-3,3,5-trimethyl-5-isocyanatomethyl-cyclohexan zu einem Urethan- und Isocyanatgruppen aufweisenden Polyadditionsprodukt mit einem NCO-Gehalt von 0,05 bis 8 Gew.-% und dessen Umsetzung mit 1,4-Phenylendiisocyanat (p-PDI) zum Isocyanatgruppen aufweisenden Prepolymeren, wobei das Äquivalenzverhältnis der Hydroxylgruppen von (a) oder (a) und (b) zu NCO-Gruppen der aromatischen Diisocyanate, ausgewählt aus der Gruppe Toluylen-diisocyanat, Diphenylmethan-diisocyanat, 3,3'-Dimethyl-diphenyl-diisocyanat, 1,2-Diphenylethan-diisocyanat, und/oder 1,6-Hexamethylen-diisocyanat und/oder 1-Isocyanato-3,3,5-trimethyl-5-isocyanatomethyl-cyclohexan und NCO-Gruppen von 1,4-Phenylendiisocyanat (p-PDI) 1 : größer als 1 bis 6 : 0,02 bis 6 beträgt.

7. Polyisocyanatprepolymere nach Anspruch 6, **dadurch gekennzeichnet, daß** als aromatisches Diisocyanat Diphenylmethan-diisocyanat verwendet wird.

8. Polyisocyanatprepolymere nach Anspruch 6 oder 7, **dadurch gekennzeichnet, daß** als Polyhydroxylverbindung eine difunktionelle Polyhydroxylverbindung mit einem Molekulargewicht von 800 bis 3.500 und aus der Gruppe der Polyester-polyole, hydroxylgruppenhaltigen Polycarbonate und Polyoxytetramethylen-glykole ausgewählt ist.

9. Zellige Polyurethan-Elastomere, erhältlich durch ein Verfahren nach einem der Ansprüche 1 bis 5.

**Claims**

1. A process for producing cellular polyurethane elastomers by reacting

   a) polyhydroxyl compounds having a functionality of from 2 to 3 and a molecular weight of from 800 to 6 000 and

   b) if desired, chain extenders and/or crosslinkers having a molecular weight up to 800 with

   c) organic polyisocyanate prepolymers,

   d) if desired, catalysts,

   e) blowing agents and

   f) if desired, additives,

   wherein the organic polyisocyanate prepolymers used are ones which are obtainable by reacting at least one aromatic diisocyanate selected from the group consisting of tolylene diisocyanate, diphenylmethane diisocyanate, 3,3'-dimethylbiphenyl diisocyanate, 1,2-diphenylethane diisocyanate and/or aliphatic diisocyanate having from 4 to 12 carbon atoms and/or cycloaliphatic diisocyanate having from 6 to 18 carbon atoms with the component a) or a mixture of the components a) and b) in an equivalence ratio of the hydroxyl groups of a) or a) and b) of 1:> 1-6 to form a polyaddition product containing urethane and isocyanate groups and subsequently reacting the polyaddition product with phenylene 1,4-diisocyanate in an equivalence ratio of hydroxyl groups of a) or a) and b) of 1:0.02-6 to give polyisocyanate prepolymers.

**2.** A process as claimed in claim 1, wherein the polyhydroxyl compounds a) are bifunctional, have a molecular weight of from 800 to 3 500 and are selected from the group consisting of polyester polyols, hydroxyl-containing polycarbonates and polyoxybutylene glycols.

**3.** A process as claimed in claim 1 or 2, wherein diphenylmethane diisocyanate is used as aromatic diisocyanate.

**4.** A process as claimed in any of claims 1 to 3, wherein the blowing agent (e) is selected from the group consisting of alkanes having from 4 to 8 carbon atoms, cycloalkanes having from 4 to 6 carbon atoms and water and mixtures thereof.

**5.** A process as claimed in any of claims 1 to 4, wherein the resulting PU elastomers have a density of from 0.2 to 1.1 g/l.

**6.** A polyisocyanate prepolymer having an NCO content of from 3.3 to 10% by weight and prepared by reacting at least one polyhydroxyl compound having a functionality of from 2 to 3 and a molecular weight of from 800 to 6 000 (a) or a mixture of (a) and a chain extender and/or crosslinker having a molecular weight up to 800 (b) with at least one aromatic diisocyanate selected from the group consisting of tolylene diisocyanate, diphenylmethane diisocyanate, 3,3'-dimethylbiphenyl diisocyanate, 1,2-diphenylethane diisocyanate, and/or hexamethylene 1,6-diisocyanate and/or 1-isocyanato-3,3,5-trimethyl-5-isocyanatomethylcyclohexane to form a polyaddition product containing urethane and isocyanate groups and having an NCO content of from 0.05 to 8% by weight and reacting this with phenylene 1,4-diisocyanate (p-PDI) to give the prepolymer containing isocyanate groups, where the equivalence ratio of the hydroxyl groups of (a) or (a) and (b) to NCO groups of the aromatic diisocyanates selected from the group consisting of tolylene diisocyanate, diphenylmethane diisocyanate, 3,3'-dimethylbiphenyl diisocyanate and 1,2-diphenylethane diisocyanate, and/or hexamethylene 1,6-diisocyanate and/or 1-isocyanato-3,3,5-trimethyl-5-isocyanatomethylcyclohexane and NCO groups of phenylene 1,4-diisocyanate (p-PDI) is 1: 1>-6:0.02-6.

**7.** A polyisocyanate prepolymer as claimed in claim 6, wherein diphenylmethane diisocyanate is used as aromatic diisocyanate.

**8.** A polyisocyanate prepolymer as claimed in claim 6 or 7, wherein a bifunctional polyhydroxyl compound having a molecular weight of from 800 to 3 500 and selected from the group consisting of polyester polyols, hydroxyl-containing polycarbonates and polyoxytetramethylene glycols is used as polyhydroxyl compound.

**9.** A cellular polyurethane elastomer obtainable by a process as claimed in any of claims 1 to 5.

**Revendications**

**1.** Procédé pour la préparation d'élastomères cellulaires de polyuréthannes par mise en réaction de

a) des composés polyhydroxylés possédant une fonctionnalité de 2 à 3 et un poids moléculaire de 800 à 6000 et,

b) le cas échéant, des agents d'allongement de chaînes et/ou des agents de réticulation possédant un poids moléculaire allant jusqu'à 800 avec

c) des prépolymères de polyisocyanates organiques,

d) le cas échéant, des catalyseurs,

e) des agents de transformation en mousse et

f) le cas échéant, des additifs,

**caractérisé en ce qu'**on utilise des prépolymères de polyisocyanates organiques que l'on obtient par mise en réaction d'au moins un diisocyanate aromatique choisi parmi le groupe comprenant le toluylène-diisocyanate, le diphénylméthane-diisocyanate, le 3,3'-diméthyl-diphényldiisocyanate, le 1,2-diphényléthane-diisocyanate, et/ou un diisocyanate aliphatique contenant de 4 à 12 atomes de carbone, et/ou un diisocyanate cycloaliphatique contenant de 6 à 18 atomes de carbone avec le composant a) ou avec un mélange des composants a) et b) dans le rapport d'équivalence des groupes hydroxyle de a) ou de a) et b) de 1 : supérieur à 1 - 6, pour obtenir un produit de polyaddition contenant des groupes uréthanne et isocyanate, et par réaction ultérieure du produit de polyaddition avec le 1,4-phényl-diisocyanate dans le rapport d'équivalence des groupes hydroxyle de a) ou de a) et b) de 1 : 0,02 à 6, pour des prépolymères de polyisocyanates.

2. Procédé selon la revendication 1, **caractérisé en ce que** les composés polyhydroxylés a) sont difonctionnels, possèdent un poids moléculaire de 800 à 3500 et sont choisis parmi le groupe comprenant des polyester-polyols, des polycarbonates contenant des groupes hydroxyle et des polyoxybutylène-glycols.

3. Procédé selon la revendication 1 ou 2, **caractérisé en ce qu'**on utilise, à titre de diisocyanate aromatique, du diphénylméthane-diisocyanate.

4. Procédé selon l'une quelconque des revendications 1 à 3, **caractérisé en ce que** l'agent de transformation en mousse est choisi parmi le groupe des alcanes contenant de 4 à 8 atomes de carbone, des cycloalcanes contenant de 4 à 6 atomes de carbone et de l'eau ou encore un mélange de ces divers éléments.

5. Procédé selon l'une quelconque des revendications 1 à 4, **caractérisé en ce que** les élastomères de polyuréthane résultants possèdent une densité de 0,2 à 1,1 g/l.

6. Prépolymères de polyisocyanates possédant une teneur en groupe NCO de 3,3 à 10 % en poids, préparés par mise en réaction d'au moins un composé polyhydroxylé possédant une fonctionnalité de 2 à 3 et un poids moléculaire de 800 à 6000 (a) ou d'un mélange de (a) et d'un agent d'allongement de chaînes et/ou d'un agent de réticulation (b) possédant un poids moléculaire allant jusqu'à 800, avec au moins un diisocyanate aromatique choisi parmi le groupe comprenant le toluylène-diisocyanate, le diphénylméthane-diisocyanate, le 3,3'-diméthyl-diphényldiisocyanate, le 1,2-diphényléthane-diisocyanate et/ou le 1,6-hexaméthylène-diisocyanate et/ou le 1-isocyanato-3,3,5-triméthyl-5-isocyanato-méthylcyclohexane pour obtenir un produit de polyaddition présentant des groupes uréthane et des groupes isocyanate, possédant une teneur en groupes NCO de 0,05 à 8 % en poids et par la mise en réaction de ce dernier avec du 1,4-phénylène-diisocyanate (p-PDI) pour obtenir des prépolymères présentant des groupes isocyanate, le rapport d'équivalence des groupes hydroxyle de (a) ou de (a) et (b) aux groupes NCO des diisocyanates aromatiques choisi parmi le groupe comprenant le toluylène-diisocyanate, le diphénylméthane-diisocyanate, le 3,3'-diméthyl-diphényl-diisocyanate, le 1,2-diphényléthanediisocyanate et/ou le 1,6-hexaméthylène-diisocyanate et/ou le 1-isocyanato-3,3,5-triméthyl-5-isocyanato-méthylcyclohexane, le nombre de groupes NCO du 1,4-phénylène-diisocyanate (p-PDI) s'élevant de 1 : > 1 à 6 : 0,02 à 6.

7. Prépolymères de polyisocyanates selon la revendication 6, **caractérisés en ce qu'**on utilise, à titre de diisocyanate aromatique, du diphénylméthane-diisocyanate.

8. Prépolymères de polyisocyanates selon la revendication 6 ou 7, **caractérisés en ce qu'**on sélectionne, à titre de composé polyhydroxylé, un composé polyhydroxylé difonctionnel qui possède un poids moléculaire de 800 à 3500, choisi parmi le groupe comprenant des polyester-polyols, des polycarbonates contenant des groupes hydroxyle et des polyoxytétraméthylène-glycols.

9. Elastomères de polyuréthanes cellulaires que l'on obtient via un procédé selon l'une quelconque des revendications 1 à 5.